# EUROPÄISCHE PATENTANMELDUNG

(11) **EP 1 128 340 A1**
(43) Veröffentlichungstag der Anmeldung: **29.08.2001**
(21) Anmeldenummer: 00116788.1
(22) Anmeldetag: 03.08.2000
(51) Int. Cl.: G07F 7/02, H04M 17/00, G07F 19/00

(54) **Verfahren zum Aufladen eines Kundenkontos für Telekommunikationsdienste und entsprechendes Aufladesystem**

(30) Priorität: 22.02.2000 DE 10008132
(71) Anmelder: Brodos AG, 91083 Baiersdorf (DE)
(72) Erfinder: Brokelmann, Dominik, 91083 Baiersdorf (DE)
(74) Vertreter: Grünecker, Kinkeldey, Stockmair & Schwanhäusser Anwaltssozietät

(57) **Zusammenfassung**

Verfahren zum Aufladen eines Kundenkontos für Telekommunikationsdienste um eine gewünschte Anzahl von Werteinheiten, wobei das Kundenkonto einem Prepaid-Modul oder einer Prepaid-Karte zugeordnet ist und von einem den Telekommunikationsdienst anbietenden Netzwerkbetreiber geführt wird und wobei das Verfahren folgende Schritte aufweist: Bezahlen der gewünschten Anzahl von Werteinheiten an eine Bezahlstelle, Aufbau einer Online-Verbindung zwischen der Bezahlstelle und dem Netzwerkbetreiber oder zwischen der Bezahlstelle und einer Zwischenstation, Übertragen einer Kundenkontoaufladeanfrage von der Bezahlstelle an den Netzwerkbetreiber oder die Zwischenstation, wobei die Anfrage zumindest Information bezüglich des entsprechenden Kundenkontos enthält sowie Information, anhand derer sich die Anzahl der bezahlten Werteinheiten ableiten lässt, Empfangen der Kundenkontoaufladeanfrage durch den Netzwerkbetreiber oder durch die Zwischenstation und Identifizieren der anfragenden Bezahlstelle, Überprüfen der Bonität der Bezahlstelle durch den Netzwerkbetreiber oder durch die Zwischenstation, Senden einer geprüften Kundenkontoaufladeanfrage an den Netzwerkbetreiber von der Zwischenstation bei positiver Bonitätsprüfung durch die Zwischenstation, und Aufladen des entsprechenden Kundenkontos durch den Netzwerkbetreiber bei positiver Bonitätsprüfung oder bei Empfang einer geprüften Kundenkontoaufladeanfrage von der Zwischenstation.

## Beschreibung

Die vorliegende Erfindung bezieht sich auf ein Verfahren zum Aufladen eines Kundenkontos für Telekommunikationsdienste, sowie auf ein entsprechendes Aufladesystem.

Um bargeldloses Telefonieren in öffentlichen Telefonzellen zu ermöglichen, wurden die sog. Telefon-Karten entwickelt. Die in Europa am Weitesten verbreitete Ausführungsform von Telefon-Karten ist die Chip-Karte, auf deren Chip eine bestimmte Anzahl von Telefoneinheiten gespeichert wird, die der Benutzer beim Erwerb der Karte vorbezahlt und anschließend in öffentlichen Telefonzellen bzw. Karten-Telefonen in Gesprächsminuten einlösen kann. Allein in Europa werden derzeit jährlich mehrere Hundert Millionen Telefon-Karten verkauft.

Telefon-Karten stellen eine einfache Ausführungsform der sog. Prepaid-Karten dar. Prepaid-Karten sind ganz allgemein Guthaben-Karten bezüglich eines vorher eingezahlten Betrags. Ein wesentlicher Nachteil derartiger Prepaid-Karten besteht darin, dass sie nicht aufladbar und somit nicht wiederverwendbar sind, was bei der sehr hohen Anzahl jährlich verkaufter Karten zu einer großen Müllerzeugung und einer dementsprechenden Umweltbelastung führt.

In den letzten Jahren wurden Prepaid-Karten verstärkt im Mobilfunkbereich eingesetzt. Der Vorteil von Prepaid-Karten in diesem Bereich ist im Wegfall von Grundgebühren und der Einhaltung eines fest vorgegebenen Budgets zu sehen.

Bei dem Erwerb eines Prepaid-Karten-Mobiltelefons erhält der Käufer ein als SIM (Subscriber Identity Module)-Karte bezeichnetes Chip-Modul, das die Prepaid-Karte repräsentiert und in das Mobiltelefon eingesteckt wird. Auf der SIM-Karte sind u. a. die PIN (Personal Identification Number)-Nummer und die Rufnummer des Mobiltelefons gespeichert. Der SIM- bzw. Prepaid-Karte ist bei dem entsprechenden Netzwerkbetreiber, der die Prepaid-Mobiltelefone unterstützt, ein Kundenkonto zugeordnet, von dem vorbezahlte Werteinheiten abrufbar sind. Vorzugsweise entspricht die Kundenkontonummer der PIN-Nummer.

Ein wesentlicher Vorteil der im Mobilfunkbereich verwendeten Prepaid-Karten besteht darin, dass keine Vertragsbindung besteht und das Guthaben stets neu aufgefrischt werden kann. Hierzu kann der Benutzer des Mobiltelefons beispielsweise in einem Telefonshop eine sog. Cash-Karte kaufen. Der Benutzer bezahlt beim Erwerb der Cash-Karte eine bestimmte Anzahl von Werteinheiten, die er anschließend durch Nutzung von Telekommunikationsdiensten wieder verbraucht. Zum Aufladen des seiner Prepaid-Karte zugeordneten Kundenkontos ruft der Benutzer den entsprechenden Netzbetreiber über eine kostenlose Telefonnummer an, über die er mit einem IVR (interactive voice response)-Dienst verbunden wird. Der IVR-Dienst fordert den Benutzer auf, eine auf der Cash-Karte enthaltene Code-Nummer, die als PIN-Nummer ausgeführt sein kann, über die Tastatur seines Mobiltelefons einzugeben. Der Netzwerkbetreiber empfängt die Code-Nummer in Verbindung mit den Daten der Prepaid-Karte bzw. des SIM-Moduls und kann somit bestimmen, auf welchem Kundenkonto welche Anzahl von Werteinheiten gutzuschreiben ist. Die Übertragung der Code-Nummer erfolgt in der Regel mittels des jeweiligen Mobiltelefons, wobei die durchgeführte Aufladung dem Mobilfunkteilnehmer vorzugsweise durch Senden einer kurzen Benachrichtigung in Form einer SMS (Short Message Service)-Nachricht bestätigt wird.

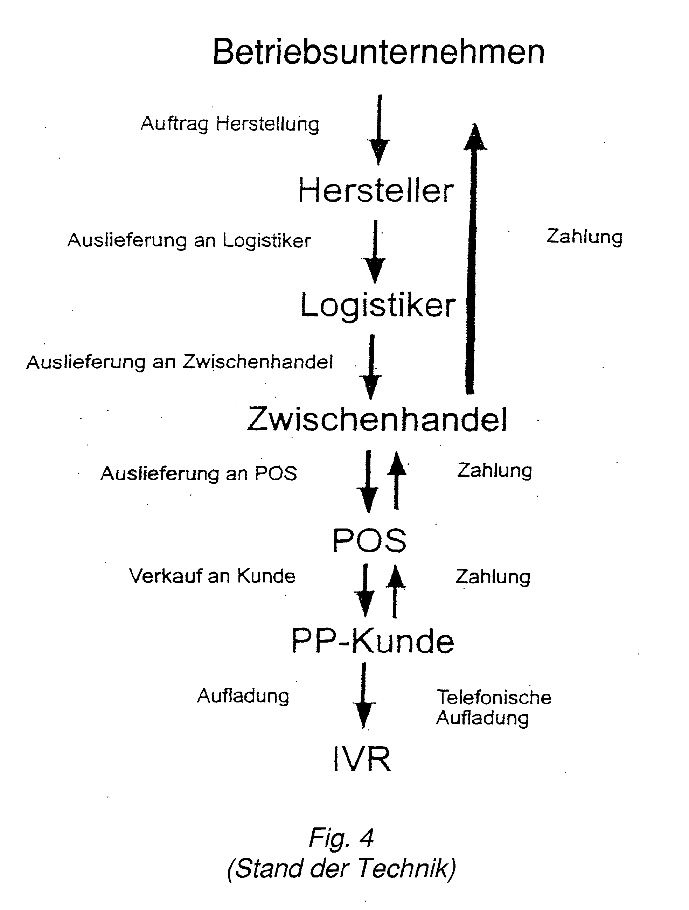

Fig. 4 zeigt ein Aufladeverfahren gemäß dem Stand der Technik, an dem mindestens ein Betriebsuntemehmen, ein Hersteller, Logistikuntemehmen, Zwischenhandelsunternehmen, sowie Bezahlstellen POS, Prepaid-Karten-Kunden bzw. PP-Kunden und ein IVR-Dienst beteiligt sind. Bei dem Betriebsunternehmen handelt es sich um einen Netzbetreiber, der Prepaid-Karten und/oder Cash-Karten von dem Hersteller herstellen lässt, der wiederum die Karten durch den Logistikbetrieb an den Zwischenhandel ausliefert. Hierbei erhalten die Zwischenhandelsunternehmen entsprechende Prepaid-Karten und/oder Cash-Karten nicht nur von einem, sondern von verschiedenen Netzbetreibern und geben diese Vielzahl von Karten an die Bezahlstellen POS weiter. Ein Prepaid-Kunde, der im Besitz einer Prepaid-Karte ist und das entsprechende, von einem Netzbetreiber geführte Kundenkonto um eine bestimmte Anzahl von Werteinheiten aufladen möchte, erwirbt in einer Bezahlstelle POS eine Cash-Karte, wobei er an die Bezahlstelle einen Betrag bezahlt, der der Anzahl von Werteinheiten, die der Cash-Karte zugeordnet sind, entspricht. Zum Aufladen des Kundenkontos überträgt der PP-Kunde die auf der Cash-Karte enthaltene Code-Nummer an den IVR-Dienst, der üblicher Weise von dem Betriebsunternehmen betrieben wird, das die Aufladung des entsprechenden Kundenkontos bewirkt.

Ein Nachteil dieses Verfahrens besteht darin, dass bei der ständig steigenden Anzahl von Mobilfunkteilnehmern mit Prepaid-Karten-Telefonen eine große Anzahl von Cash-Karten hergestellt und verteilt werden muss. Ein anderer Nachteil besteht darin, dass die Cash-Karten wertbehaftet sind und deshalb von den Bezahlstellen POS vorfinanziert werden müssen. Jeglicher Kartenverlust vor dem endgültigen Verkauf an den Endkunden geht somit zu Lasten der Bezahlstellen POS bzw. der Telefonshops.

Ausgehend von dem bekannten Stand der Technik liegt der vorliegenden Erfindung die Aufgabe zugrunde, eine Möglichkeit zu schaffen, Kundenkonten für Telekommunikationsdienste einfacher und sicherer aufladen zu können.

Diese Aufgabe wird durch die Gegenstände der Patentansprüche 1, 4, 16 und 18 gelöst. Bevorzugte Ausführungsformen der vorliegenden Erfindung sind Gegenstand der Unteransprüche.

Insbesondere wird die Aufgabe der vorliegenden Erfindung durch ein Verfahren zum Aufladen eines Kundenkontos für Telekommunikationsdienste um eine gewünschte Anzahl von Werteinheiten gelöst, wobei das Kundenkonto einem Prepaid-Modul oder einer Prepaid-Karte zugeordnet ist und von einem dem Telekommunikationsdienst anbietenden Netzwerkbetreiber geführt wird. Unter Prepaid-Modul wird ein Datenträger verstanden, der ein Telekommunikationsendgerät, wie z. B. ein Mobilfunktelefon individualisiert und für die Inanspruchnahme eines Telekommunikationsdienstes autorisiert. Im einfachsten Fall kann das Prepaid-Modul durch einen gespeicherten Code gebildet sein; im üblichsten Fall durch eine Prepaid-Karte.

Das erfindungsgemäße Verfahren weist in einer ersten Variante folgende Schritte auf: Bezahlen der gewünschten Anzahl von Werteinheiten an eine Bezahlstelle, Aufbau einer Online-Verbindung zwischen der Bezahlstelle und dem Netzwerkbetreiber oder zwischen der Bezahlstelle und einer Zwischenstation, Übertragen einer Kundenkontoaufladanfrage von der Bezahlstelle an den Netzwerkbetreiber oder die Zwischenstation, wobei die Anfrage zumindest Information bezüglich des entsprechenden Kundenkontos enthält sowie Information, anhand derer sich die Anzahl der bezahlten Werteinheiten ableiten lässt, Empfangen der Kundenkontoaufladeanfrage durch den Netzwerkbetreiber oder durch die Zwischenstation und Identifizieren der anfragenden Bezahlstelle, Überprüfen der Bonität der Bezahlstelle durch den Netzwerkbetreiber oder durch die Zwischenstation, Senden einer geprüften Kundenkontoaufladeanfrage an den Netzwerkbetreiber von der Zwischenstation bei positiver Bonitätsprüfung durch die Zwischenstation und Aufladen des entsprechenden Kundenkontos durch den Netzwerkbetreiber bei positiver Bonitätsprüfung oder bei Empfang einer geprüften Kundenkontoaufladeanfrage von der Zwischenstation.

Darüber hinaus wird die Aufgabe der vorliegenden Erfindung gelöst durch ein Verfahren gemäß dem Gegenstand des Anspruchs 4 sowie durch ein Verfahren gemäß dem Anspruch 18 und durch ein Aufladesystem gemäß dem Gegenstand des Anspruchs 16.

Gemäß einem besonderen Aspekt der vorliegenden Erfindung wird ein Kundenkonto für Telekommunikationsdienste, das einem Prepaid-Modul oder einer Prepaid-Karte zugeordnet ist, online aufgeladen. Ein wesentlicher Vorteil einer solchen Online-Aufladung besteht darin, dass die gemäß dem Stand der Technik übliche Herstellung von Cash-Karten entfällt, wodurch Rohstoffe eingespart werden, Müll vermieden wird, die logistischen Abläufe vereinfacht werden und insbesondere der Aufladevorgang beschleunigt wird. Des weiteren entfällt die im Stand der Technik notwendige Vorfinanzierung der Cash-Karten durch die Bezahlstellen.

Gemäß einem weiteren besonderen Aspekt der vorliegenden Erfindung ist der Telekommunikationsdienst, der von dem Netzwerkbetreiber angeboten wird, ein Mobilfunkdienst. Des weiteren verfügt die Bezahlstelle über ein Eingabeterminal, das zum Erstellen der Online-Verbindung mit dem Netzwerkbetreiber oder mit der Zwischenstation verwendet wird und in das die in der Kundenkontoaufladeanfrage enthaltene Information eingegeben wird. Diese Kundenkontoaufladeanfrage enthält vorzugsweise die Telefonnummer, die dem Kundenkonto zugeordnet ist und/oder eine Kundenkontonummer und/oder eine Identifikationsnummer, die der anfordernden Bezahlstelle zugeordnet ist.

Gemäß einem weiteren besonderen Aspekt der vorliegenden Erfindung nimmt eine Vielzahl von Netzwerkbetreibern an den erfindungsgemäßen Verfahren teil, wobei die Kundenkontoaufladeanfrage eine Identfikationsnummer enthält, die einem bestimmten Netzwerkbetreiber zugeordnet ist. Des weiteren kann die Zwischenstation durch ein Zwischenhandelsunternehmen gebildet werden und die Bezahlstelle durch einen Telefonshop.

Gemäß einem weiteren besonderen Aspekt der vorliegenden Erfindung umfaßt das Durchführen einer Bonitätsprüfung in bezug auf Bezahlstellen nicht nur eine einfache Überprüfung der Zahlungsfähigkeit, sondern vielmehr überprüft die Zwischenstation oder der Netzwerkbetreiber vorzugsweise die Zahlungsmoral und ―historie der anfragenden Bezahlstelle. Hierbei können hinsichtlich jeder Bezahlstelle in einer elektronischen Datenbank Daten gesammelt werden, die bei Durchführen der Bonitätsprüfung jeweils abgefragt werden. Somit können verschiedene Kriterien ausgewählt werden, um zu einem positiven oder negativen Ergebnis bei der Bonitätsprüfung zu gelangen, z. B. Zahlungsfähigkeit, Zahlungsrückstand oder Überschreiten eines vorgegebenen Kreditrahmens.

Gemäß einer besonders bevorzugten Ausführungsform der vorliegenden Erfindung kann das Aufladen des Kundenkontos für Telekommunikationsdienste um eine gewünschte Anzahl von Werteinheiten ausgehend von einem sog. Aufladeautomaten ausgeführt werden. In diesem Fall kann der Aufladeautomat sowohl nur die Bezahlstelle als auch die Bezahlstelle und die Zwischenstation ersetzen. Es ist möglich, dass solche Aufladeautomaten ähnlich gebräuchlicher Bargeld-Automaten jeweils von verschiedenen Netzwerkbetreibern verwaltet werden, wobei ausgehend von einem Aufladeautomaten eines bestimmten Netzwerkbetreibers gegen eine vorbestimmte Gebühr ebenfalls eine Aufladung eines Kundenkontos eines anderen Netzwerkbetreibers durchgeführt werden könnte.

Gemäß einer weiteren bevorzugten Ausführungsform der vorliegenden Erfindung kann die Zwischenstation abrufbare Werteinheiten zum Aufladen eines Kundenkontos bei einem Netzbetreiber einkaufen und derart vorfinanzierte Werteinheiten im Anschluss an die positive Bonitätsprüfung einem bestimmten Kundenkonto zuweisen. Hierbei ist es möglich, dass die Zwischenstation Cash-Karten oder PIN-Nummern bei einer Vielzahl von Netzwerkbetreibern einkauft und die auf den jeweiligen Cash-Karten enthaltenen Code-Nummern bzw. PIN-Nummern mittels einem sog. PIN-Server verwalten, wobei jede PIN-Nummer abrufbare Werteinheiten bei einem bestimmten Netzwerkbetreiber repräsentiert. Die dem bestimmten Kundenkonto zugewiesenen, vorfinanzierten Werteinheiten werden von der Zwischenstation im Rahmen der geprüften Kundenkontoaufladeanfrage an den Netzbetreiber gesendet, der das entsprechende Kundenkonto um die entsprechenden, von der Zwischenstation vorfinanzierten Werteinheiten auflädt. In diesem Fall ist die geprüfte Kundenkontoaufladeanfrage nicht nur die Information an den Netzbetreiber, ein Kundenkonto aufzuladen, sondern zusätzlich eine Information, welche vorfinanzierte PIN-Nummer als Gegenwert verwendet werden soll.

Gemäß einer weiteren bevorzugten Ausführungsform der vorliegenden Erfindung kann das Verfahren die folgenden Schritte aufweisen: Einkaufen von Code-Nummern bzw. PIN-Nummern, die abrufbare Werteinheiten zum Aufladen des Kundenkontos repräsentieren von einem Netzwerkbetreiber durch eine Zwischenstation, Bezahlen der gewünschten Anzahl von Werteinheiten an eine Bezahlstelle, Aufbau einer Online-Verbindung zwischen der Bezahlstelle und der Zwischenstation, Übertragen einer Kundenkontoaufladeanfrage von der Bezahlstelle an die Zwischenstation, wobei die Anfrage zumindest Information enthält, anhand derer sich die Anzahl der bezahlten Werteinheiten ableiten lässt, Empfangen der Kundenkontoaufladeanfrage durch die Zwischenstation und Identifizieren der anfragenden Bezahlstelle, Überprüfen der Bonität der Bezahlstelle durch die Zwischenstation, Senden einer bestimmten PIN-Nummer, die die gewünschte Anzahl von abrufbaren Werteinheiten repräsentiert von der Zwischenstation an die Bezahlstelle oder an den Kunden bei positiver Bonitätsprüfung durch die Zwischenstation, Übertragen der PIN-Nummer an den Netzwerkbetreiber durch die Bezahlstelle oder den Kunden und Aufladen des entsprechenden Kundenkontos durch den Netzwerkbetreiber.

Für den Fall, dass die PIN-Nummer von der Zwischenstation an die Bezahlstelle gesendet wird, kann die Bezahlstelle diese PIN-Nummer entweder unmittelbar an den Netzwerkbetreiber zum Aufladen des entsprechenden Kundenkontos senden oder die PIN-Nummer an den Kunden übertragen, der diese an den Netzwerkbetreiber überträgt zum Aufladen des Kundenkontos. Für den Fall, dass die PIN-Nummer von der Zwischenstation an den Kunden gesendet wird, kann dies beispielsweise durch Senden einer Nachricht mittels eines SMS-Dienstes erfolgen.

Bevorzugte Ausführungsformen der vorliegenden Erfindung werden im Folgenden unter Bezugnahme auf die beiliegenden Zeichnungen näher erläutert. Dabei zeigen die Zeichnungen im Einzelnen:
- Fig. 1: ein Flussdiagramm zur Illustration eines Aufladevorgangs gemäß einer ersten Variante der vorliegenden Erfindung;
- Fig. 2: ein Blockdiagramm zur Illustration eines Aufladesystems gemäß der vorliegenden Erfindung;
- Fig. 3: ein Flussdiagramm zur Illustration eines Aufladevorgangs gemäß einer zweiten Variante der vorliegenden Erfindung;
- Fig. 4: ein Flussdiagramm zur Illustration des Bereitstellens und Aufladens von Prepaid-Karten gemäß dem Stand der Technik.

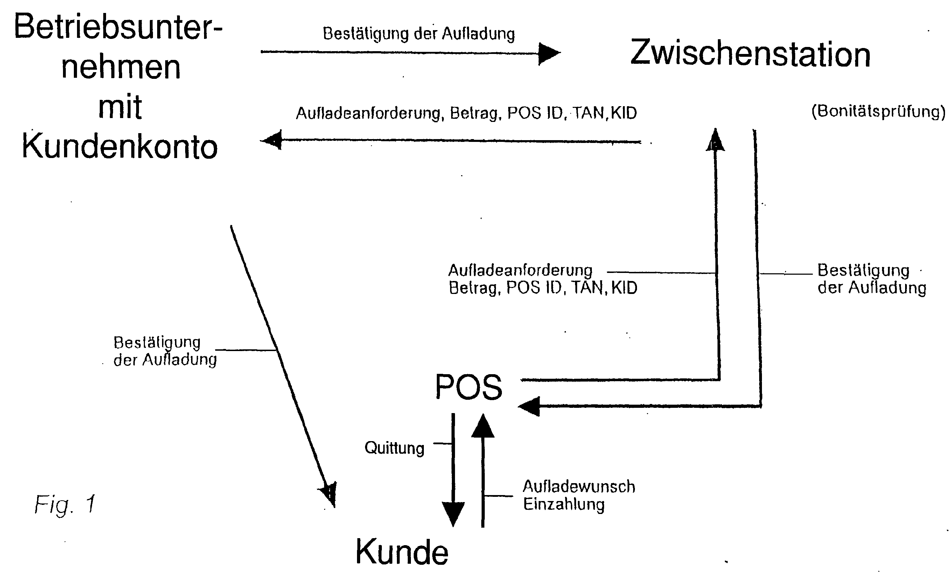

Fig. 1 zeigt ein Flussdiagramm zur Illustration des Ablaufs eines Aufladevorgangs eines Kundenkontos gemäß einer besonders bevorzugten Ausführungsform der vorliegenden Erfindung, wobei das Kundenkonto einer Prepaid-Karte eines Kunden zugeordnet ist und der Kunde über eine Bezahlstelle POS und eine Zwischenstation eine Aufladung seines Kundenkontos, das von einem Betriebsunternehmen geführt wird, bewirken kann. Das Betriebsunternehmen kann beispielsweise ein Netzwerkbetreiber bzw. Netzbetreiber, d.h. ein Betreiber eines Mobilfunknetzes oder eines Festnetzes, oder ein Internet-Provider sein. Das Aufladen des Kundenkontos erfolgt bevorzugter Weise "online". Um die Online-Aufladung des Kundenkontos zu gewährleisten, stehen die Bezahlstelle POS, die Zwischenstation und das Betriebsunternehmen über ein elektronisches Kommunikationsnetz miteinander in Verbindung.

Der Kunde, der eine Aufladung seines Kundenkontos um eine bestimmte Anzahl von Werteinheiten wünscht, zahlt in der Bezahlstelle POS einen Betrag ein, der der Anzahl von Werteinheiten entspricht. Für den beispielhaften Fall, das es sich bei dem Betriebsuntemehmen um den Betreiber eines Mobilfunknetzes handelt, stellen die Werteinheiten Telefoneinheiten oder Geldeinheiten dar. Die Einzahlung kann zu einem beliebigen Zeitpunkt, d.h. vor, während oder nach dem Aufladen, mittels gebräuchlicher Zahlungsmittel, wie beispielsweise Bargeld, Scheck- oder Kreditkarte, erfolgen.

In einem weiteren Schritt werden in eine an der Bezahlstelle verfügbare Eingabeeinrichtung Daten eingegeben, die eine Anforderung zum Aufladen des Kundenkontos um die bestimmte Anzahl von Werteinheiten repräsentieren. Diese Aufladeanforderungsdaten, die eine Kundenkontoaufladeanfrage darstellen, werden von der Bezahlstelle POS an die Zwischenstation übertragen. Zum Eingeben der Aufladeanforderungsdaten wird vorzugsweise ein Computer bzw. Terminal verwendet, der zumindest eine Anzeigeeinrichtung, eine Tastatur und vorzugsweise auch eine Leseeinrichtung für Chipkarten aufweist. Insbesondere können die Anzeigeeinrichtung und die Tastatur kombiniert als berührungsempfindliche Anzeige, d.h. als "Touchscreen" ausgeführt werden.

Die Aufladeanforderungsdaten umfassen beispielsweise die Angabe des Betrags der Einzahlung (Betrag), eine Transaktions-Nummer (TAN) sowie ein Kundenidentifikationsmerkmal (KID), so dass das Betriebsunternehmen eindeutig bestimmen kann, welches Kundenkonto um wie viele Werteinheiten aufgeladen werden soll. Insbesondere können die Aufladeanforderungsdaten ein Identifikationskennzeichen (POS ID) hinsichtlich der die Daten übertragenden Bezahlstelle POS aufweisen, das eine eindeutige Bestimmung der Bezahlstelle POS ermöglicht. Diese eindeutige Identifizierung der Bezahlstelle POS erlaubt der Zwischenstation nach Erhalt der Aufladeanforderungsdaten eine Bonitätsprüfung der entsprechenden Bezahlstelle POS durchzuführen, wobei die ordnungsgemäße Arbeitsweise der Bezahlstelle überprüft wird. Diese Bonitätsprüfung ist somit eine Sicherheitsprüfung und/oder eine Identitätsprüfung, mittels der sichergestellt wird, dass die von der Bezahlstelle übertragenen Informationen korrekt sind.

Für den Fall, dass die Bonitätsprüfung zu einem negativen Ergebnis führt, wird die Aufladeanforderung des Kunden zurückgewiesen. Für den Fall, dass die Bonitätsprüfung zu einem positiven Ergebnis führt, leitet die Zwischenstation die Aufladeanforderung in Form einer geprüften Aufladeanforderung an das Betriebsunternehmen weiter, das das entsprechende Kundenkonto verwaltet. Das Betriebsunternehmen ermittelt das entsprechende Kundenkonto und führt die Aufladung um die bestimmte Anzahl von Werteinheiten durch. Anschließend übermittelt das Betriebsunternehmen eine Bestätigung der durchgeführten Aufladung an die Zwischenstation, die diese Bestätigung wiederum an die Bezahlstelle POS weiterleitet.

Für den Fall, dass das aufzuladende Kundenkonto einer Prepaid-Karte eines Mobiltelefons zugeordnet ist, kann das Kundenidentifikationsmerkmal KID die Ruf-Nummer des entsprechenden Mobiltelefons repräsentieren. Dies ermöglicht dem Betriebsunternehmen, d.h. dem Betreiber des entsprechenden Mobilfunknetzes, nach dem Aufladen dem entsprechenden Kunden unmittelbar die Aufladung beispielsweise in Form einer SMS-Nachricht, die an dessen Mobiltelefon gesendet wird, zu bestätigen. Für den Fall, dass das aufzuladende Kundenkonto einer Prepaid-Karte zugeordnet ist, die für eine Verwendung im Festnetz- oder Internet vorgesehen ist, erfolgt die Bestätigung der Aufladung dem Kunden gegenüber vorzugsweise durch die Bezahlstelle POS.

Gemäß einer weiteren bevorzugten Ausführungsform der vorliegenden Erfindung kann die Bezahlstelle POS als ein sogenannter "Aufladeautomat" ausgebildet werden. Ein derartiger Aufladeautomat kann beispielsweise ähnlich wie ein Fahrscheinautomat ausgeführt sein. Der Kunde leistet eine Zahlung in Form von Bargeld oder mittels einer Scheck- oder Kreditkarte und gibt Daten in eine Eingabeeinrichtung des Aufladeautomaten ein, die eine Anforderung zum Aufladen seines Kundenkontos um eine bestimmte Anzahl von Werteinheiten repräsentieren. Die Eingabeeinrichtung des Aufladeautomaten weist eine Anzeigeeinrichtung und eine Tastatur auf, die bevorzugter Weise kombiniert als berührungsempfindliche Anzeige, d.h. als "Touchscreen" ausgeführt werden. Des weiteren weist der Aufladeautomat eine Leseeinrichtung für Chipkarten auf, vorzugsweise zum Lesen von Scheck- oder Kreditkarten. Die Verarbeitung der Daten in dem Automaten erfolgt vollautomatisch, beispielsweise durch Ausführen eines hierzu geeigneten Software-Programms. Anschließend erhält der Kunde eine gedruckte Ausgabe in Form eines Tickets als Bestätigung der Einzahlung. Insbesondere bestätigt das Ticket die durchgeführte Aufladung des Kundenkontos um die bestimmte Anzahl von Werteinheiten, die der Einzahlung entsprechen.

Des Weiteren kann ein Aufladeautomat die eingegebenen Daten an die Zwischenstation senden, die den entsprechenden Aufladeautomaten verwaltet und die wiederum, wie oben beschrieben, die Daten an das Betriebsunternehmen weiter leitet. Ähnlich wie in den Aufladeautomaten kann die Bearbeitung von Aufladeanforderungen in der Zwischenstation ebenfalls vollautomatisch, d.h. mittels Ausführen eines geeigneten Software-Programms, erfolgen.

Insbesondere ist es möglich, im Falle der Verwendung von Aufladeautomaten auf die Zwischenstation zu verzichten. Hierbei wird jeweils eine Vielzahl von Aufladeautomaten unmittelbar von einem bestimmten Betriebsunternehmen betrieben und verwaltet, wodurch eine Bonitätsprüfung überflüssig wird.

In der oben beschriebenen Ausführungsform des Verfahrens zum Aufladen eines Kundenkontos gemäß der vorliegenden Erfindung ist bevorzugter Weise eine Vielzahl von Betriebsunternehmen beteiligt. Hierbei ist die Transaktions-Nummer (TAN) vorzugsweise zweiteilig ausgeführt, wobei einer der beiden Teile eine Identifikations-Nummer repräsentiert, die jeweils einem spezifischen Betriebsunternehmen zugeordnet ist und wobei der andere Teil eine beliebige, vorzugsweise fortlaufende Nummer darstellt. Somit kann die Zwischenstation jeweils das Betriebsunternehmen, das das jeweilige Kundenkonto führt, eindeutig identifizieren und die von der Bezahlstelle POS empfangenen Aufladeanforderungsdaten zu diesem Betriebsunternehmen senden. Für den Fall, das die Bezahlstelle POS als Aufladeautomat ausgeführt wird, kann man vorzugsweise über ein in der Anzeigeeinrichtung angezeigtes Auswahlmenü aus einer Vielzahl von Betriebsunternehmen auswählen und dem ausgewählten Betriebsunternehmen unmittelbar die Aufladeanforderungdaten zusenden.

Eine weitere Möglichkeit besteht darin, dass verschiedene Betriebsunternehmen jeweils eigene Aufladeautomaten betreiben und diese ähnlich wie gebräuchliche Bankautomaten funktionieren, d.h. ein Kunde kann an einem beliebigen Aufladeautomaten eines beliebigen Betriebsunternehmens eine Aufladung des Kundenkontos, das seiner Prepaid-Karte zugeordnet ist, bewirken. Hierbei verrechnet das den entsprechenden Aufladeautomaten betreibende Betriebsunternehmen die Aufladung mit dem Betriebsunternehmen, das das entsprechende Kundenkonto verwaltet, vorzugsweise online. Somit übernimmt das Betriebsunternehmen, das den entsprechenden Aufladeautomaten betreibt, die Rolle der Zwischenstation. Da hierbei quasi ein Betriebsunternehmen für ein anderes Betriebsunternehmen tätig wird, könnte von dem Kunden beispielsweise eine Erstattung anfallender Gebühren gefordert werden.

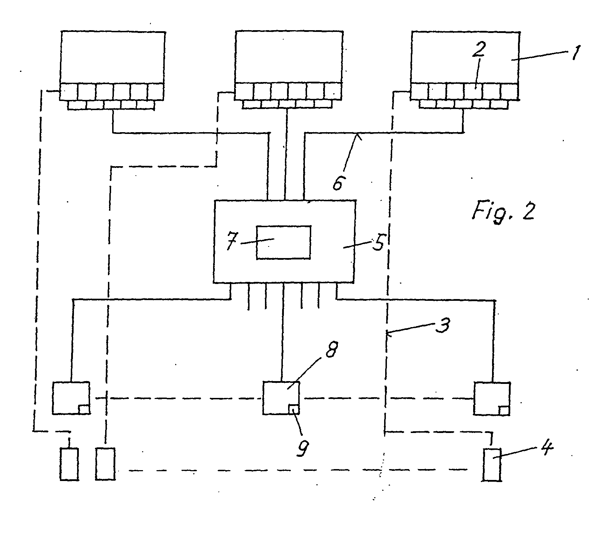

Fig. 2 zeigt ein Blockdiagramm zur Illustration eines Aufladesystems zum Aufladen eines Kundenkontos um eine gewünschte Anzahl von Werteinheiten, wobei das Kundenkonto einer Prepaid-Karte zugeordnet ist. Gemäß einer bevorzugten Ausführungsform der vorliegenden Erfindung umfaßt das Aufladesystem eine Vielzahl von Betriebsunternehmen 1, die über ein elektronisches Kommunikationsnetz 6 mit einer Zwischenstation 5 verbunden sind, wobei die Zwischenstation 5 wiederum über ein elektronisches Kommunikationsnetz mit einer Vielzahl von Bezahlstellen 8 verbunden ist. Gemäß einer anderen Variante können die Betriebsunternehmen 1 über ein elektronisches Kommunikationsnetz unmittelbar mit den Bezahlstellen 8 verbunden sein. Jedes Betriebsunternehmen 1 führt eine Vielzahl von Kundenkonten 2. Die Verwaltung der Kundenkonten 2 erfolgt vorzugsweise mittels zumindest eines Computers unter der Verwendung von geeigneten Software-Programmen.

Eine Vielzahl von Kunden 4 mit aufladbaren Prepaid-Karten kann über ein elektronisches Kommunikationsnetz 3 unmittelbar mit dem Betriebsunternehmen 1 kommunizieren, um beispielsweise den Status des jeweiligen Kundenkontos 2 abzufragen, wobei das elektronische Kommunikationsnetz 3 beispielsweise ein Mobilfunk- oder ein Festnetz ist. Insbesondere kann ein Kunde 4 über das Internet oder über SMS Informationen bezüglich seines Kundenkontos abfragen. Auf dieselbe Art und Weise können Informationen von dem jeweiligen Betriebsunternehmen 1 an den Kunden 4 gesendet werden, wie beispielsweise eine Aufladebestätigung oder eine Aufforderung zum erneuten Aufladen der entsprechenden Prepaid-Karte, falls das entsprechende Kundenkonto leer ist.

Zur Aufladung seiner Prepaid-Karte stehen einem Kunden 4 in einer von einer Vielzahl von Bezahlstellen POS Eingabeeinrichtungen 9 zur Verfügung. Die Eingabeeinrichtung 9 wird vorzugsweise als Computer bzw. Terminal ausgeführt, der bzw. das zumindest eine Anzeigeeinrichtung, eine Tastatur und eine Leseeinrichtung für Chipkarten aufweist. Insbesondere können die Anzeigeeinrichtung und die Tastatur kombiniert als berührungsempfindliche Anzeige, d.h. als "Touchscreen" ausgeführt werden. In die Eingabeeinrichtung 9 in der Bezahlstelle 8 werden Daten eingegeben, die eine Anforderung zum Aufladen des Kundenkontos um die bestimmte Anzahl von Werteinheiten repräsentieren und über das Kommunikationsnetz 6 an die Zwischenstation 5 übertragen werden.

Die Terminals können jeweils eine Kartenlesevorrichtung aufweisen, in die eine Chip- oder Magnetkarte eingeführt werden kann. Die Leseeinrichtung liest Daten aus, die auf der jeweiligen Karte gespeichert sind. Das Auslesen kann kontaktbehaftet oder kontaktlos mittels Transpondertechnik erfolgen. Die Karte ist vorzugsweise eine Autorisationskarte, die von dem Betreiber der Zwischenstation oder alternativ von einem entsprechenden Netzwerkbetreiber an die Bezahlstellen ausgegeben wird. Die Karte speichert Daten, die, wenn sie vom Lesegerät ausgelesen wurden und über ein elektronisches Netzwerk, vorzugsweise Intemet, an die Zwischenstation oder an einen Netzbetreiber geliefert werden, dem Empfänger ermöglichen zu erkennen, dass der Anfragende für eine derartige Anfrage tatsächlich autorisiert ist. Vereinfacht ausgedrückt bedeutet dies, dass nur autorisierten Händlern diese Karten ausgehändigt werden und die Zwischenstation bzw. ein Netzbetreiber anhand der Daten, die von der Karte ausgelesen werden und an ihn gesendet werden, erkennen kann, dass es sich um einen berechtigten Händler handelt.

Die Information, die auf den entsprechenden Karten gespeichert ist, stellt eine eindeutige Identifikation hinsichtlich der Bezahlstelle dar und stellt im bevorzugten Fall ein elektronisches Zertifikat dar, das von der empfangenen Zwischenstation oder von dem empfangenen Netzbetreiber als Autorisation erkannt werden kann.

Die oben beschriebenen Autorisationskarten stellen somit einen Zugriffberechtigungsnachweis dar und führen zu einer erhöhten Sicherheit des Systems. Da so geschaffene Zugangsberechtigungssystem kann zusätzlich zu der Bonitätsprüfung vorhanden sein oder dieses setzen. Wenn die Zuverlässigkeit der Autorisationskarten als ausreichend empfunden wird, so kann eine Bonitätsprüfung entfallen, da in diesem Fall davon ausgegangen wird, dass derjenige, der im Besitz einer derartigen Karte ist, auch ausreichend Bonität hat bzw. dass eine Bonitätsprüfung bei diesem Benutzer überflüsssig ist. Im Falle, dass sowohl Bonitätsprüfung als auch Autoritätskarten Verwendung finden, entsteht ein System mit doppelter Sicherheit. Dieser Aspekt der Autoritätskarten unterscheidet sich grundsätzlich von herkömmlichen E-Commerce-Verfahren, bei denen jeglicher Anfrager mit einem Host-System (Zwischenstation oder den Netzbetreiber) in Kontakt treten kann. Werden die erwähnten Karten verwendet, so werden von vornherein nur die Anfrager zugelassen, bei denen die von der Karte ausgewiesenen Daten die notwendige Identifizierung nachweisen. Somit kann nicht jeder mit dem Host-Server in Kontakt treten, sondern nur die vorher autorisierten Personen oder Händler. Die von der Autorisationskarte abgelesenen Karten werden zusammen mit den eigentlichen Aufladeanforderungsdaten von der Bezahlstelle 8 zu der Zwischenstation oder zu dem Netzwerkbetreiber gesendet.

Bevorzugter Weise identifiziert die Zwischenstation 5 anhand der empfangenen Daten zunächst die anfordernde Bezahlstelle 8 und führt eine Bonitätsprüfung dieser Bezahlstelle 8 mittels einer hierzu bereit gestellten Überprüfungseinheit 7 durch, die wiederum als Computer ausgeführt sein kann, der mittels hierzu geeigneter Software-Programme die Bonitätsprüfung durchführt. Des Weiteren kann auch die Bearbeitung der Aufladeanforderungsdaten in der Zwischenstation 5 vollautomatisch, d.h. mittels Computern und geeigneter Software-Programme durchgeführt werden.

Insbesondere können die einzelnen Bezahlstellen 8 als Aufladeautomaten ausgebildet werden, wobei die Eingabeeinrichtungen 9 jeweils zumindest eine Anzeigeeinrichtung und eine Tastatur aufweisen, die bevorzugter Weise kombiniert als berührungsempfindliche Anzeige, d.h. als "Touchscreen" ausgeführt werden. Des weiteren weisen die Aufladeautomaten jeweils eine Leseeinrichtung für Chipkarten auf, vorzugsweise zum Lesen von Scheck- oder Kreditkarten. Des weiteren können diese Aufladeautomaten unmittelbar die Funktion der Zwischenstation 5 übernehmen, wobei wiederum jedes Betriebsunternehmen 1 über eigene Aufladeautomaten verfügen kann, die gemäß einer besonders bevorzugten Ausführungsform der vorliegenden Erfindung ebenfalls dazu dienen, Aufladungen von Kundenkonten anderer Betriebsunternehmen durchzuführen, wobei jedes Betriebsunternehmen 1 seine Kundenkonten selbst verwaltet und eine Verrechnung verkaufter Werteinheiten bzw. Aufladungen von Kundenkonten zwischen den einzelnen Betriebsunternehmen 1 erfolgt.

Gemäß einer weiteren bevorzugten Ausführungsform verwaltet die Zwischenstation 5 alle Aufladeautomaten und leitet alle Aufladeanforderungen an das jeweilige Betriebsunternehmen 1 weiter. Somit erfolgt eine Verrechnung zwischen der Zwischenstation 5 und den einzelnen Betriebsuntemehmen 1.

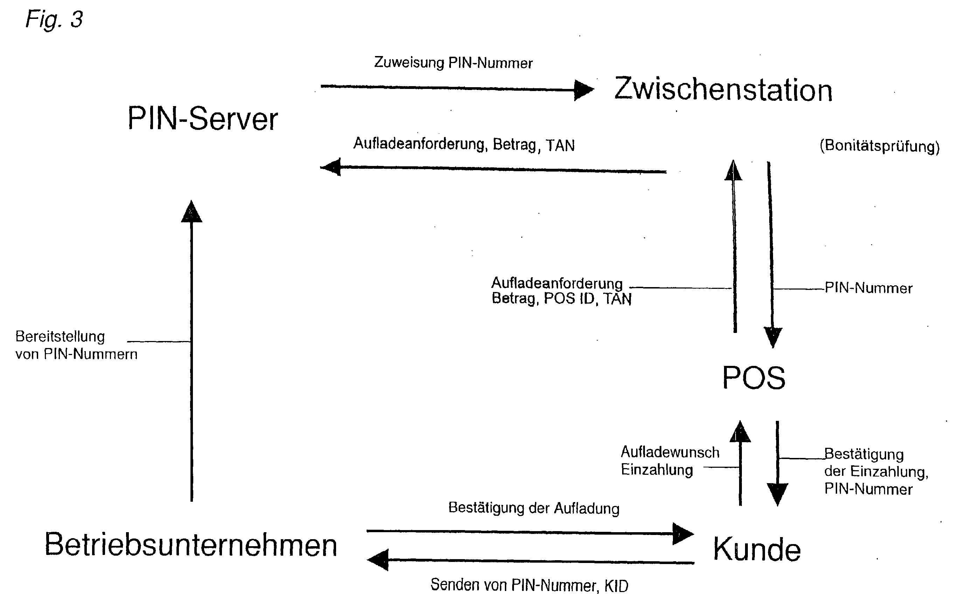

Fig. 3 zeigt ein Flussdiagramm zur Illustration des Ablaufs eines Aufladevorgangs eines Kundenkontos gemäß einer weiteren, besonders bevorzugten Ausführungsform der vorliegenden Erfindung, wobei das Kundenkonto einer Prepaid-Karte eines Kunden zugeordnet ist und dem Kunde über eine Bezahlstelle POS und eine Zwischenstation eine in einem PIN-Server gespeicherte PIN-Nummer zugewiesen werden kann zur Aufladung seines Kundenkontos, das von einem Betriebsunternehmen geführt wird. Die Bezahlstelle POS, die Zwischenstation und der PIN-Server stehen über ein elektronisches Kommunikationsnetz miteinander in Verbindung. Das Betriebsunternehmen kann beispielsweise ein Betreiber eines Mobilfunknetzes oder eines Festnetzes, oder ein Internet-Provider sein. Die PIN-Nummer repräsentiert abrufbare Werteinheiten zum Aufladen des Kundenkontos.

Gemäß einer Variante kann die PIN-Nummer im Rahmen der geprüften Aufladeanforderung von der Zwischenstation an das Betriebsunternehmen gesendet werden, das die Aufladung des entsprechenden Kundenkontos ausführt. Gemäß einer weiteren Variante kann die PIN-Nummer von der Zwischenstation an die Bezahlstelle gesendet werden. Die Bezahlstelle sendet dann die PIN-Nummer an das Betriebsunternehmen zum Aufladen des entsprechenden Kundenkontos oder stellt dem entsprechenden Kunden die PIN-Nummer bereit. Die PIN-Nummer wird dann vorzugsweise von dem Kunden an das entsprechende Betriebsunternehmen gesendet, das das Kundenkonto des Kunden auflädt. Gemäß einer anderen Variante sendet die Zwischenstation die PIN-Nummer vorzugsweise in Form einer SMS-Nachricht an den Kunden, der diese wiederum an das Betriebsunternehmen sendet.

Ansonsten entspricht der Ablauf des Aufladevorgangs im wesentlichen dem Aufladevorgang, wie er in bezug auf Fig. 1 beschrieben wurde und wird deshalb nicht weiter erläutert. Allerdings umfassen die Aufladeanforderungsdaten in dem Aufladevorgang gemäß Fig. 3 beispielsweise nur die Angabe des Betrags der Einzahlung (Betrag) und eine Transaktions-Nummer (TAN), so dass die Zwischenstation eindeutig bestimmen kann, welche PIN-Nummer zum Aufladen des Kundenkontos um die gewünschte Anzahl von Werteinheiten verwendet werden muß. Für den Fall, dass das aufzuladende Kundenkonto einer Prepaid-Karte eines Mobiltelefons zugeordnet ist, kann das Kundenidentifikationsmerkmal KID die Ruf-Nummer des entsprechenden Mobiltelefons repräsentieren und mit der PIN-Nummer von dem Mobiltelefon des Kunden an das Betriebsunternehmen gesendet werden. Dies ermöglicht dem Betriebsunternehmen, d.h. dem Netzwerkbetreiber bzw. Netzbetreiber des entsprechenden Mobilfunknetzes, nach dem Aufladen dem entsprechenden Kunden unmittelbar die Aufladung beispielsweise in Form einer SMS-Nachricht, die an dessen Mobiltelefon gesendet wird, zu bestätigen.

Gemäß einer weiteren bevorzugten Ausführungsform der vorliegenden Erfindung kann die Bezahlstelle POS wiederum als ein sogenannter "Aufladeautomat" ausgebildet werden. Hierbei erhält der Kunde eine gedruckte Ausgabe in Form eines Tickets als Bestätigung der Einzahlung bzw. der Aufladung. Gemäß einer anderen Variante enthält das Ticket die PIN-Nummer, die eine Aufladung des Kundenkontos um die bestimmte Anzahl von Werteinheiten, die der Einzahlung entsprechen, ermöglicht.

Ein wesentlicher Vorteil des erfindungsgemäßen Ablaufs eines Aufladevorgangs eines Kundenkontos, das einer Prepaid-Karte zugeordnet ist, sowie des entsprechenden Aufladesystems besteht darin, dass nicht mehr die im Stand der Technik üblichen "Aufladekarten" erzeugt und vertrieben werden müssen. Somit können die hierzu erforderlichen Rohstoffe eingespart werden. Insbesondere werden die logistischen Abläufe wesentlich vereinfacht und das Aufladen eines Kundenkontos kann nunmehr online erfolgen, was eine komfortable Lösung für Prepaid-Kartenbenutzer darstellt und den Aufwand zur Verwaltung von Prepaid-Kundenkonten vereinfacht.

Die Bezahlstellen können auch durch Computer gebildet sein, die über das Internet mit der Zwischenstation oder dem Netzbetreiber in Verbindung stehen. In diesem Fall kann die Bezahlung gemäß üblicher E-Commerce Varianten wie Eingabe von Kreditkartennummer etc. erfolgen.

Weitere Details bezüglich der vorliegenden Erfindung gehen aus den folgenden Erläuterungen hervor.

Eine weitere Aufgabe der Erfindung ist es daher, zwecks Vermeidunq des Wertgegenstandes "Prepaidkarte" ein Verfahren und eine Vorrichtung der eingangs genannten Art zu schaffen, das bzw. die ab der Geldbetrag-Einzahlung elektronisch abläuft bzw. arbeitet. Das erfindungsgemäße Verfahren ist, diese Aufgabe lösend, dadurch gekennzeichnet, daß die Kundennummer/Einzahlung-Information vermittels des Bezahlstelle-Eingabegeräts der Einzahlung-Bezahlstelle eingegeben wird, daß die eingegebene Kundennummer/ Einzahlung-Information von der Einzahlung-Bezahlstelle an die Zwischenstation geleitet wird, daß die Zwischenstation die Bonitätsprüfung der Einzahlung-Bezahlstelle durchführt und daß nach der Bonitätsprüfung die Kundenkonto/Einzahlung-Information von der Zwischenstation an das Betriebsunternehmen gegeben wird.

Ein bevorzugtes erfindungsgemäßes Verfahren läuft nach der Einzahlung völlig elektronisch ab, d.h. es arbeitet mit einem elektronischen System, wobei sich für den Kunden nur ändert, daß die Kundennummer/Einzahlung-Information jetzt an dem Bezahlstelle-Eingabegerät eingegeben wird, das z.B. eine Tastatur ist. Die Bezahlstelle gibt die Kundennummer/Einzahlung-Information an die Zwischenstation weiter und hat keine vorausfinanzierten Prepaidkarten vorrätig zu halten. Die Zwischenstation prüft mittels der Bonitätsprüfung, ob die jeweilige Bezahlstelle im Zusammenhang mit der Kundenkonto-Aufladung eine ordnungsgemäße Arbeitsweise hat. Zu der ordnungsgemäßen Arbeitsweise gehört unter anderem, daß eine Kundenkonto/Einzahlung-Information nur nach tatsächlich erfolgter Einzahlung weitergegeben wird und daß der Einzahlung-Geldbetrag weiterverrechnet und weitergeleitet wird. Wenn die Bezahlstelle bei der Zwischenstation negativ gekennzeichnet ist, wird die Kundenkonto/Einzahlung-Information zurückgewiesen. Wenn die Bezahlstelle bei der Zwischenstation positiv gekennzeichnet ist, wird die Kundenkonto/Einzahlung-Information an das Betriebsunternehmen weitergeleitet. Der Kunde erhält die Bestätigung der Aufladung wie an sich bekannt, z.B. vom Betriebsunternehmen, z.B. mittels des Handy auf dessen Display.

Das erfindungsgemäße Verfahren wird mittels Elektronik und Software bzw. Computerprogrammen verwirklicht. Z.B. sind bei dem Betriebsunternehmen, der Zwischenstation und den Bezahlstellen Computer installiert, die über das elektronische Kommunikationsnetz miteinander verbunden sind. Auch die Bonitätsprüfung läuft elektronisch ab, wobei im Computer der Zwischenstation Daten eingegeben sind, welche die einzelnen Bezahlstellen betreffen. Der Zwischenstation kommt bei dem erfindungsgemäßen Verfahren besondere Bedeutung zu, da sie die Bonität der Bezahlstellen, nicht der Kunden, zu prüfen hat. Die Bonitätsprüfung ist eine Sicherheitsprüfung und eine Identitätsprüfung und stellt sicher, daß die von der Bezahlstelle erhaltenen Informationen richtig sind. Die Auflade-Bestätigung wird z.B. vom Betriebsunternehmen an die Zwischenstation und von dieser an den Kunden gegeben.

Es ist denkbar, das erfindungsgemäße Verfahren mit nur einem Betriebsunternehmen durchzuführen. Besonders zweckmäßig und vorteilhaft ist es jedoch, wenn mehrere Betriebsunternehmen vorgesehen sind und die Kundennummer/Einzahlung-Information eines der Betriebsunternehmen benennt und wenn die Zwischenstation die bei ihr eingehenden Kundenkonto/Einzahlung-Informationen dem jeweils benannten Betriebsunternehmen zuordnet. Die Zwischenstation hat jetzt zusätzlich die Bedeutung, die abgegebenen Kundennummer/Einzahlung-Informationen im Hinblick auf die Betriebsunternehmen zu sichten und auf die entsprechenden Betriebsunternehmen zu verteilen. Die Zwischenstation ist zu einer zentralen Abwicklungsstelle geworden.

Das bisherige Verteilernetz: Betriebsunternehmen - Hersteller - Logistiker - Zwischenstation - Bezahlstelle - Kunde für die Prepaidkarten ist entfallen, wodurch die Unkosten erheblich gesenkt sind. Die Bezahlstelle wird mit einer auf das erfindungsgemäße Verfahren abgestellten Software ausgerüstet. Die Bezahlstelle gibt dem Kunden für den eingezahlten Geldbetrag wie bisher eine gedruckte Quittung. Das Betriebsunternehmen ist z.B. ein Netzbetreiber eines Mobilfunktnetzes. Die Bonitätsprüfung identifiziert die jeweilige Bezahlstelle und prüft deren ordnungsgemäße Arbeitsweise. Es erfolgt wie bisher bei dem bekannten Verfahren ein Geldfluß von der Bezahlstelle zu der Zwischenstation und/oder zu dem Betriebsunternehmen.

Besonders zweckmäßig und vorteilhaft ist es, wenn die Zwischenstation bei der jeweiligen Bezahlstelle den Eingang der Kundennummer/Einzahlung-Information bestätigt und/oder wenn das Betriebsunternehmen der Zwischenstation den Eingang der Kundennummer/Einzahlung-Information bestätigt. Dies erhöht die Sicherheit der Funktion des erfindungsgemäßen Verfahrens.

Besonders zweckmäßig und vorteilhaft ist es auch, wenn jede Bezahlstelle mit einer mit Daten zur Bonitätsprüfung versehenen Kontrollkarte ausgerüstet ist, die zum Eingeben der Kundennummer/Einzahlung-Information bei der Bezahlstelle eingegeben wird. Diese Kontrollkarte wird z.B. bei der Bezahlstelle in deren Computer zum Ablesen der Daten gesteckt. Die Kontrollkarte erleichtert die Bonitätsprüfung. Unter Computer der Bezahlstelle wird hier nicht nur ein Händlercomputer gemeint, der von einem Händler bedient wird, sondern auch ein Computer eines Terminals, das vom Kunden selbst bedient wird.

Die jeder Bezahlstelle zugeordnete Kontrollkarte enthält gespeicherte Information und ist z.B. eine Smartkarte und zwar z.B. eine reine Speicherkarte und in der Regel eine Prozessorkarte. Das Abfragen der von der Kontrollkarte kommenden Information ist Teil der Bonitätsprüfung, die bei der Zwischenstation erfolgt. Die z.B. als Prozessorkarte ausgebildete Kontrollkarte läßt sich personenbezogen ausbilden und zwar auf eine bestimmte Bedienungsperson bei der Bezahlstelle abgestellt. Die Kontrollkarte, insbesondere die als Prozessorkarte ausgebildete Kontrollkarte ist wichtig, wenn das Kommunikationsnetz, über das die Zwischenstation mit dem Betriebsunternehmen verbunden ist, ein frei zugängliches Kommunikationsnetz wie das Internet ist.

Besonders zweckmäßig und vorteilhaft ist es sodann, wenn die Bezahlstelle ein Einzahlungsautomat ist, der das Bezahlstelle-Eingabegerät aufweist und eine den Geldbetrag annehmende Einzahleinrichtung aufweist und die Weiterleitung der Kundennummer/Einzahlung-Information freigibt. Eine solche automatisierte Bezahlstelle nimmt wie ein Parkscheinautomat Geldbeträge an und wird daraufhin wirksam und zwar dahingehend, daß die vom Kunden eingegebene Kundennummer/Einzahlung-Information weitergegeben wird.

Bei dem erfindungsgemäßen Verfahren wird in der Regel das Kundenkonto nicht in Geldeinheiten geführt, sondern in Werteinheiten, die jeweils einer Werteinheit einer Gegenleistung entsprechen. Es wird sozusagen eine gewisse Menge an Gegenleistung-Werteinheiten gekauft und über diese Gegenleistung kann der Kunde dann verfügen. Dies ist z.B. beim Mobilfunk-Telefon der Fall, bei dem Telefoneinheiten gekauft und auf dem Kundenkonto verwaltet werden, wobei der Kunde diese Telefoneinheiten verbrauchen kann. In diesem Fall stellt das Betriebsunternehmen nur eine Art von Gegenleistung zur Verfügung. Die Einzahlung eines Geldbetrags ist die Bestellung dieser einen Dienstleistung und zwar mit einer dem Geldbetrag entsprechenden Anzahl von Werteinheiten.

Das erfindungsgemäße Verfahren arbeitet in der Regel unter Einsatz einer Autorisierungsstelle, welche die Bezahlstellen als solche autorisiert und die Bezahlstellen mit den zu ihrer Legitimierung und Identifikation erforderlichen Information ausrüstet, z.B. die Bezahlstellen mit den Kontrollkarten versorgt. Diese Autorisierungsstelle ist z.B. bei der Zwischenstation vorgesehen, da diese die Bonitätsprüfung durchzuführen hat.

Die Erfindung sieht auch zur Lösung der gestellten Aufgabe eine Vorrichtung der eingangs genannten Art vor, die dadurch gekennzeichnet ist, daß die Bezahlstelle mit ihrem Computer und ihrem Eingabegerät, das elektronische Kommunikationsnetz zwischen der Bezahlstelle und der Zwischenstation und die Zwischenstation mit ihrem Computer zur Verarbeitung der Kundennummer/Einzahlung-Informationen ausgebildet sind, daß die Zwischenstation mit ihrem Computer zur Durchführung der Bonitätsprüfung pro Kundennummer/Einzahlung-Information mittels eines Bereichs für Bonitätsprüfung ausgebildet ist, und daß die Zwischenstation mit ihrem Computer, das elektronische Kommunikationsnetz zwischen der Zwischenstation und dem Betriebsunternehmen und das Betriebsunternehmen mit seinem die Kundenkonten bildenden Computer zur Übergabe der Kundennummer/Einzahlung-Information von der Zwischenstation an das zugeordnete Kundenkonto beim Betriebsunternehmen ausgebildet ist.

Die Übertragung der Informationen zwischen der jeweiligen Bezahlstelle und der Zwischenstation einerseits und/oder zwischen der Zwischenstation und dem jeweiligen Betriebsunternehmen erfolgt in der Regel verschlüsselt bzw. codiert. Es liegt also eine sogenannte gesicherte Verbindung vor. Die Sicherung erfolgt z.B. nach dem Einmal-Paßwort-Verfahren. Eine solche gesicherte Verbindung ist insbesondere wichtig, wenn die Zwischenstation und das Betriebsunternehmen voneinander geographisch räumlich getrennt sind.

Es ist denkbar, die Zwischenstation als einen Bestandteil des Betriebsunternehmens zu gestalten, wobei der Computer der Zwischenstation und der Computer des Betriebsunternehmens einen einheitlichen Gesamt-Computer bilden. In der Regel sind jedoch das Betriebsunternehmen und die Zwischenstation voneinander geographisch räumlich getrennt sowie verschiedene wirtschaftliche Unternehmen. Der Betrieb der Zwischenstation läuft in der Regel voll automatisch ab.

Die bei der erfindungsgemäßen Vorrichtung hinsichtlich Kundennummer/Einzahlung-Information und Bonitätsprüfung vorgesehene Ausbildung wird mittels Software, d.h. Computerprogrammen verwirklicht. Die Computer der Bezahlstellen, der Computer der Zwischenstation und der Computer des Betriebsunternehmens werden mit der erforderlichen Software ausgerüstet. Die jeweilige Software liegt z.B. in Form eines elektronischen Bausteins vor.

Gemäß einem besonderen Aspekt der vorliegenden Erfindung ist in einem Verfahren zum Aufladen eines Prepaid-Kundenkontos das Kundenkonto eines von vielen bei einem Betriebsunternehmen eingerichteten Prepaid-Kundenkonten, wobei jedem Kunden bzw. Kundenkonto eine Kundennummer zugeordnet ist. Eine Vielzahl von Bezahlstellen ist vorgesehen, die den Kundenkonten des Betriebsunternehmens zugeordnet sind und jeweils ein Bezahlstelle-Eingabegerät aufweisen. Eine Zwischenstation ist einerseits den Bezahlstellen und andererseits dem Betriebsunternehmen zugeordnet, wobei das Betriebsunternehmen, die Zwischenstation und die Bezahlstellen an ein elektronisches Kommunikationsnetz angeschlossen sind. Ein Kunde macht für sein Kundenkonto bei einer der Bezahlstellen eine Geldbetrag-Einzahlung, wobei eine dieses Kundenkonto und diese Einzahlung wiedergebende Information mittels eines Eingabegeräts eingegeben wird und an das Betriebsunternehmen unter Aufladung des Kundenkontos gegeben wird, die dem Kunden bestätigt wird. Von der Zwischenstation ist eine Bonitätsprüfung jeder Bezahlstelle durchführbar und die Kundennummer/Einzahlung-Information wird mittels des Bezahlstelle-Eingabegeräts der Einzahlung-Bezahlstelle eingegeben, so dass die eingegebene Kundennummer/Einzahlung-Information von der Einzahlung-Bezahlstelle an die Zwischenstation geleitet wird, die Zwischenstation die Bonitätsprüfung der Einzahlung-Bezahlstelle durchführt und nach der Bonitätsprüfung die Kundenkonto/Einzahlung-Information von der Zwischenstation an das Betriebsunternehmen gegeben wird.

Gemäß einem weiteren Aspekt der vorliegenden Erfindung sind mehrere Betriebsunternehmen vorgesehen und die Kundennummer/Einzahlung-Information eines der Betriebsunternehmen benennt, so dass die Zwischenstation die bei ihr eingehenden Kundenkonto/Einzahlungs-Informationen dem jeweils benannten Betriebsunternehmen zuordnet.

Gemäß einem weiteren Aspekt der vorliegenden Erfindung bestätigt die Zwischenstation der jeweiligen Bezahlstelle den Eingang der Kundennummer/Einzahlung-Information.

Gemäß einem weiteren Aspekt der vorliegenden Erfindung bestätigt das Betriebsunternehmen der Zwischenstation den Eingang der Kundennummer/Einzahlung-Information.

Gemäß einem weiteren Aspekt der vorliegenden Erfindung ist jede Bezahlstelle mit einer mit Daten zur Bonitätsprüfung versehenen Kontrollkarte ausgerüstet, die zum Eingeben der Kundennummer/Einzahlung-Information bei der Bezahlstelle eingegeben wird.

Gemäß einem weiteren Aspekt der vorliegenden Erfindung ist die Bezahlstelle ein Einzahlungsautomat, der das Bezahlstelle-Eingabegerät aufweist und eine den Geldbetrag annehmende Einzahleinrichtung aufweist und die Weiterleitung der Kundennummer/Einzahlung-Information freigibt.

Gemäß einem weiteren besonderen Aspekt der vorliegenden Erfindung umfasst eine Vorrichtung zur Durchführung des Verfahrens gemäß einem der oben beschriebenen Aspekte ein Betriebsunternehmen, das mit einem Computer vorgesehen ist, der eine Vielzahl von elektronischen Kundenkonten bildet, wobei der Computer bzgl. jedes Kundenkontos zur Abgabe einer Kundenkonto-Aufladung-Bestätigung für ein Kunden-Empfangsgerät ausgebildet ist, eine mit einem Computer bestückte Zwischenstation und jeweils mit einem Computer sowie einem Eingabegegerät bestückte Bezahlstellen, die Zwischenstation sowie die Bezahlstelle an ein elektronisches Kommunikationsnetz anschließbar sind. Die Bezahlstelle mit ihrem Computer und ihrem Eingagegerät, das elektronische Kommunikationsnetz zwischen der Bezahlstelle und der Zwischenstation und die Zwischenstation mit ihrem Computer sind zur Verarbeitung der Kundennummer/Einzahlung-Information ausgebildet. Die Zwischenstation ist mit ihrem Computer zur Durchführung der Bonitätsprüfung pro Kundennummer/Einzahlung-Information mittels eines Bereiches für Bonitätsprüfung ausgebildet und die Zwischenstation mit ihrem Computer, das elektronische Kommunikationsnetz zwischen der Zwischenstation und dem Betriebsunternehmen und das Betriebsunternehmen mit seinem die Kundenkonten bildenden Computer sind zur Übergabe der Kundennummer/Einzahlung-Information von der Zwischenstation an das zugeordnete Kundenkonto beim Betriebsunternehmen ausgebildet.

## Patentansprüche

1. Verfahren zum Aufladen eines Kundenkontos für Telekommunikationsdienste um eine gewünschte Anzahl von Werteinheiten, wobei das Kundenkonto einem Prepaid-Modul oder einer Prepaid-Karte zugeordnet ist und von einem den Telekommunikationsdienst anbietenden Netzwerkbetreiber geführt wird und wobei das Verfahren folgende Schritte aufweist:
Bezahlen der gewünschten Anzahl von Werteinheiten an eine Bezahlstelle,
Aufbau einer Online-Verbindung zwischen der Bezahlstelle und dem Netzwerkbetreiber oder zwischen der Bezahlstelle und einer Zwischenstation,
Übertragen einer Kundenkontoaufladeanfrage von der Bezahlstelle an den Netzwerkbetreiber oder die Zwischenstation, wobei die Anfrage zumindest Information bezüglich des entsprechenden Kundenkontos enthält sowie Information, anhand derer sich die Anzahl der bezahlten Werteinheiten ableiten lässt,
Empfangen der Kundenkontoaufladeanfrage durch den Netzwerkbetreiber oder durch die Zwischenstation und Identifizieren der anfragenden Bezahlstelle,
Überprüfen der Bonität der Bezahlstelle durch den Netzwerkbetreiber oder durch die Zwischenstation,
Senden einer geprüften Kundenkontoaufladeanfrage an den Netzwerkbetreiber von der Zwischenstation bei positiver Bonitätsprüfung durch die Zwischenstation, und
Aufladen des entsprechenden Kundenkontos durch den Netzwerkbetreiber bei positiver Bonitätsprüfung oder bei Empfang einer geprüften Kundenkontoaufladeanfrage von der Zwischenstation.

2. Verfahren nach Anspruch 1, **dadurch gekennzeichnet**, dass die Zwischenstation abrufbare Werteinheiten zum Aufladen des Kundenkontos bei einem Netzwerkbetreiber einkauft und derart vorfinanzierte Werteinheiten im Anschluss an die positive Bonitätsprüfung einem bestimmten Kundenkonto zuweist und diese Zuweisung im Rahmen der geprüften Kundenkontoaufladeanfrage an den Netzwerkbetreiber sendet und der Netzwerkbetreiber das entsprechende Kundenkonto um die entsprechenden, von der Zwischenstation vorfinanzierten Werteinheiten auflädt.

3. Verfahren nach Anspruch 2, **dadurch gekennzeichnet,** dass die Zwischenstation für die vorfinanzierten Werteinheiten im Rahmen der geprüften Kundenkontoaufladeanfrage an den Netzwerkbetreiber eine Identifikationsnummer mitsendet, anhand derer der Netzwerkbetreiber die entsprechende Anzahl aufzuladender Werteinheiten identifizieren kann.

4. Verfahren zum Aufladen eines Kundenkontos für Telekommunikationsdienste um eine gewünschte Anzahl von Werteinheiten, wobei das Kundenkonto einem Prepaid-Modul oder einer Prepaid-Karte eines Kunden zugeordnet ist und von einem den Telekommunikationsdienst anbietenden Netzwerkbetreiber geführt wird und wobei das Verfahren folgende Schritte aufweist:
Einkaufen von PIN-Nummern, die abrufbare Werteinheiten zum Aufladen des Kundenkontos repräsentieren, von einem Netzwerkbetreiber durch eine Zwischenstation,
Bezahlen der gewünschten Anzahl von Werteinheiten durch den Kunden an eine Bezahlstelle,
Aufbau einer Online-Verbindung zwischen der Bezahlstelle und der Zwischenstation,
Übertragen einer Kundenkontoaufladeanfrage von der Bezahlstelle an die Zwischenstation, wobei die Anfrage zumindest Information enthält, anhand derer sich die Anzahl der bezahlten Werteinheiten ableiten lässt,
Empfangen der Kundenkontoaufladeanfrage durch die Zwischenstation und Identifizieren der anfragenden Bezahlstelle,
Überprüfen der Bonität der Bezahlstelle durch die Zwischenstation,
Senden einer PIN-Nummer, die die gewünschte Anzahl abrufbarer Werteinheiten repräsentiert, von der Zwischenstation an die Bezahlstelle oder an den Kunden, bei positiver Bonitätsprüfung durch die Zwischenstation,
Übertragen der PIN-Nummer von der Bezahlstelle oder von dem Kunden an den Netzwerkbetreiber, und
Aufladen des entsprechenden Kundenkontos durch den Netzwerkbetreiber.

5. Verfahren nach Anspruch 4, **dadurch gekennzeichnet**, dass die Zwischenstation die PIN-Nummer als SMS-Nachricht an den Kunden sendet.

6. Verfahren nach Anspruch 4, **dadurch gekennzeichnet**, dass die Zwischenstation die PIN-Nummer an die Bezahlstelle sendet und diese die PIN-Nummer dem Kunden bereitstellt.

7. Verfahren nach einem der Ansprüche 1 bis 6, **dadurch gekennzeichnet**, dass der Telekommunikationsdienst ein Mobilfunkdienst ist.

8. Verfahren nach einem der Ansprüche 1 bis 7, **dadurch gekennzeichnet,** dass die Bezahlstelle über ein Eingabeterminal verfügt, durch das die Online-Verbindung mit dem Netzwerkbetreiber oder mit der Zwischenstation aufgebaut wird und in das die in der Kundenkontoaufladeanfrage enthaltene Information eingegeben wird.

9. Verfahren nach einem der Ansprüche 1 bis 8, **dadurch gekennzeichnet**, dass die Kundenkontoaufladeanfrage die Telefonnummer enthält, die dem aufzuladenden Kundenkonto zugeordnet ist.

10. Verfahren nach einem der Ansprüche 1 bis 9, **dadurch gekennzeichnet**, dass die Kundenkontoaufladeanfrage eine Kundenkontonummer enthält.

11. Verfahren nach einem der Ansprüche 1 bis 10, **dadurch gekennzeichnet**, dass die Kundenkontoaufladeanfrage eine Identifikationsnummer enthält, die der anfordernden Bezahlstelle zugeordnet ist.

12. Verfahren nach einem der Ansprüche 1 bis 11, **dadurch gekennzeichnet**, dass eine Vielzahl von Netzwerkbetreibem an dem Verfahren teilnehmen und dass die Kundenkontoaufladeanfrage eine Identifikationsnummer enthält, die einem bestimmten Netzwerkbetreiber zugeordnet ist.

13. Verfahren nach einem der Ansprüche 1 bis 12, **dadurch gekennzeichnet**, dass die Zwischenstation durch ein Zwischenhandelsuntemehmen gebildet wird.

14. Verfahren nach einem der Ansprüche 1 bis 13, **dadurch gekennzeichnet**, dass die Bezahlstelle durch einen Telefonshop gebildet wird.

15. Verfahren nach einem der Ansprüche 1 bis 14, **dadurch gekennzeichnet**, dass die Bezahlstelle durch einen Automaten gebildet wird.

16. System zum Aufladen eines Kundenkontos für Telekommunikationsdienste um eine gewünschte Anzahl von Werteinheiten, wobei das Kundenkonto einem Prepaid-Modul oder einer Prepaid-Karte zugeordnet ist und von einem den Telekommunikationsdienst anbietenden Netzwerkbetreiber geführt wird, umfassend mindestens eine Bezahlstelle, eine Zwischenstation und mindestens einen Netzwerkbetreiber, sowie ein elektronisches Kommunikationsnetz, wobei:
jede Bezahlstelle mit der Zwischenstation über das elektronische Kommunikationsnetz verbunden ist; und wobei
jede Bezahlstelle aufweist:
eine Zahlungsempfangseinrichtung zum Entgegennehmen eines Geldbetrags für eine gewünschte Anzahl von Werteinheiten,
eine Kommunikationseinrichtung zum Aufbauen einer Online-Verbindung über das Kommunikationsnetz zu der Zwischenstation, und
eine Sendeeinrichtung zum Senden einer Kundenkontoaufladeanfrage an die Zwischenstation, wobei die Anfrage zumindest Information bezüglich des entsprechenden Kundenkontos enthält sowie Information, anhand derer sich die Anzahl der bezahlten Werteinheiten ableiten lässt;
die Zwischenstation aufweist:
eine Empfangseinrichtung zum Empfangen der Kundenkontoaufladeanfrage über das Kommunikationsnetz von der Bezahlstelle,
eine Verarbeitungseinrichtung, zum Identifizieren der anfordernden Bezahlstelle, sowie zum Durchführen einer Bonitätsprüfung der Bezahlstelle, und
eine Sendeeinrichtung zum Senden einer geprüften Kundenkontoaufladeanfrage an einen Netzwerkbetreiber im Falle einer positiven Bonitätsprüfung; und
jeder Netzwerkbetreiber aufweist:
eine Empfangseinrichtung zum Empfangen der geprüften Kundenkontoaufladeanfrage, und
eine Verarbeitungseinrichtung zum Aufladen des entsprechenden Kundenkontos um die gewünschte Anzahl von Werteinheiten im Anschluß an den Empfang einer geprüften Kundenkontoaufladeanfrage.

17. Aufladesystem nach Anspruch 16, **dadurch gekennzeichnet**, dass die Zwischenstation zusätzlich aufweist:
einen PIN-Server, in dem PIN-Nummern gespeichert sind, die von der Zwischenstation vorfinanziert werden und abrufbare Werteinheiten zum Aufladen von Kundenkontos repräsentieren, und
eine Zuweisungseinrichtung, zum Zuweisen von einer PIN-Nummer zu einem bestimmten Kundenkonto.

18. Verfahren zum Aufladen eines Kundenkontos um eine gewünschte Anzahl von Werteinheiten über eine Bezahlstelle, wobei das Kundenkonto einem Prepaid-Modul oder einer Prepaid-Karte zugeordnet ist und von einem Betriebsunternehmen geführt wird, umfassend die Schritte:
Eingeben von Daten, die eine Anforderung zum Aufladen des Kundenkontos um die gewünschte Anzahl von Werteinheiten repräsentieren, in eine Eingabeeinrichtung der Bezahlstelle,
Übertragen der Daten von der Bezahlstelle zu dem Betriebsunternehmen, und
Aufladen des Kundenkontos um die gewünschte Anzahl von Werteinheiten durch das Betriebsunternehmen.
